Europäisches Patentamt

European Patent Office

Office européen des brevets

(11) Veröffentlichungsnummer: **0 286 930**
**B1**

# (12) EUROPÄISCHE PATENTSCHRIFT

(45) Veröffentlichungstag der Patentschrift: 23.01.91

(51) Int. Cl.⁵: **B 62 D 25/16**

(21) Anmeldenummer: **88105335.9**

(22) Anmeldetag: **01.04.88**

(54) Kotflügel für Fahrzeuge, insbesondere für die Hinterräder von Sattelzugmaschinen.

(30) Priorität: **03.04.87 DE 3711307**

(43) Veröffentlichungstag der Anmeldung:
**19.10.88 Patentblatt 88/42**

(45) Bekanntmachung des Hinweises auf die
Patenterteilung:
**23.01.91 Patentblatt 91/04**

(84) Benannte Vertragsstaaten:
**DE GB IT NL SE**

(56) Entgegenhaltungen:
**AU-B- 477 454**
**FR-A-2 589 814**
**US-A-3 876 229**

(73) Patentinhaber: **Iveco Magirus Aktiengesellschaft**
**Schillerstrasse 2 Postfach 27 40**
**D-7900 Ulm/Donau (DE)**

(72) Erfinder: **Luczkowski, Peter**
**Joh.-Palm-Strasse 71**
**D-7900 Ulm (DE)**

(74) Vertreter: **Socha, Peter, Dipl.-Ing.**
**Iveco Magirus AG Patentabteilung**
**Schillerstrasse 2**
**D-7900 Ulm (DE)**

Courier Press, Leamington Spa, England.

## Beschreibung

Die Erfindung betrifft einen Kotflügel für Fahrzeuge gemäß Oberbegriff des Anspruchs 1.

Aus DE—A—34 14 110 und DE—A—34 01 521 sind Kotflügel der vorgenannten Art vornehmlich für die Hinterräder der Zugmaschine eines Sattelanhängers bekannt, bei denen der mittlere Kotflügelabschnitt aus seiner normalerweise gebrauchten Mittellage nach vorne bzw. nach hinten zu den angrenzenden Kotflügelabschnitten verschoben werden kann. Von Nachteil ist, daß im Betriebsfall beispielsweise eines Ankuppelns eines Aufliegers oder bei einer Sattelschlepperfahrt über eine Rampe oder Kuppe jedesmal der vorgenannte Verschiebevorgang von Hand durchgeführt werden muß. Wird dieser vergessen, bedeutet dies in aller Regel eine Beschädigung des Kotflügelmittelteils. Ein reibungsloses Ummontieren oder Einschieben ist grundsätzlich nicht gewährleistet aufgrund von Fertigungstoleranzen der Kotflügeleinzelteile und insbesondere aufgrund der Schmutzausbildung am Kotflügel. Für die Ummontage bzw. für den Verschiebevorgang sind unter Umständen zwei Bedienungspersonen erforderlich.

Aufgabe der Erfindung ist die Schaffung eines Kotflügels der eingangs genannten Art, bei dem mit Hilfe einfacher Mittel das lästige Ummontieren des mittleren Kotflügelabschnitts bei Fahrten mit bzw. ohne Auflieger entfällt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 8.

Wesen der Erfindung ist die selbsttätige Verschwenkung eines schwenkbar angelenkten mittleren Kotflügelabschnitts im Bedarfsfall durch Einwirkung einer von oben wirkenden ("Stör-") Kraft auf den mittleren Kotflügelabschnitt. Wäre der mittlere Kotflügelabschnitt nach dem Stand der Technik konzipiert, so würde die vorgenannte Kraft den in der üblichen Gebrauchslage befindlichen mittleren Kotflügelabschnitt beschädigen. Wirkt die vorgenannte Kraft nicht mehr auf den mittleren Kotflügelabschnitt ein, so wird ein ausgelenkter Kotflügelabschnitt selbsttätig wieder in seine Ausgangslage zurückgeschwenkt. Durch die Erfindung entfällt mithin das lästige Ummontieren eines Kotflügelmittelteils bei Fahrten mit oder ohne Auflieger. Eine einheitliche Ausführung bei allen Sattelschleppern (z.B. Zwei- oder Dreiachs-Fahrzeuge, Luft- und Blattfederung) ist möglich. Die erfindungsgemäße Verschwenkbewegung erfolgt zuverlässig auch bei grob verschmutzten Kotflügeln.

Besonders zweckmäßig ist es, wenn die Auslenkkraft direkt vom am Zugfahrzeug angekoppelten Auflieger ausgeübt wird.

Die Rückstellung erfolgt vorteilhafterweise durch eine Rückstellfeder am nichtangelenkten Ende des mittleren Kotflügelabschnitts.

Alternativ kann die Rückstellbewegung eines ausgelenkten mittleren Kotflügelabschnitts auch ein selbsttätig schalt-bzw. betätigbares Rückzugselement vollziehen.

Die Erfindung eignet sich vornehmlich für eine Montage an der letzten bzw. hintersten Achse eines Mehrachs-Zugfahrzeugs.

Um eine Beschädigung eines Fahrzeugreifens grundsätzlich auszuschließen, sieht der mittlere Kotflügelabschnitt zweckmäßigerweise unterseitig ein bogenförmiges verschleißfestes Gleitteil vor, das bei extremer Belastung des Kotflügels bzw. Auslenkung des mittleren Kotflügelabschnitts mit dem zugeordneten Fahrzeugreifen grundsätzlich in Eingriff kommen kann, ohne letzteren zu beschädigen.

Zweckmäßigerweise ist die Anlenk- oder Querachse des mittleren Kotflügelabschnitts hinter der Achse des zugeordneten Fahrzeugrades angeordnet. Dadurch wird der in Fahrzeugrichtung vorne gelegene Bereich des mittleren Kotflügelabschnitts im Bedarfsfall nach unten in Richtung Fahrzeugreifen ausgelenkt. Dies bedeutet, daß bei einer Vorwärtsfahrt des Fahrzeugs eine günstige Schleifwirkung zwischen Gleitteil und Fahrzeugreifen ohne Verklemmung eintritt, sofern der extreme Betriebsfall eines Eingriffs zwischen Gleitteil und Reifen gegeben ist. Andererseits kann es aber auch aus konstruktiven Gründen zweckmäßig sein, wenn die Anlenk- oder Querachse des mittleren Kotflügelabschnittes vor der Achse des zugeordneten Fahrzeugrades angeordnet ist.

Eine besonders vorteilhafte Weiterbildung der Erfindung sieht vor, wenn die drei hintereinander angeordneten Kotflügelabschnitte in ihrer gewöhnlichen Gebrauchslage, d.h. bei nicht ausgelenktem mittleren Kotflügelabschnitt, stetig ineinander übergehen und einen oberseitig geschlossenen Kotflügel bilden. Ein derartiger Kotflügel besitzt letztlich die gleichen Vorteile wie ein einteiliger Kotflügel insbesondere im Hinblick auf Verschmutzungsschutz. Es entstehen zwischen den Anschlußstellen der einzelnen Kotflügelabschnitte keine Spalten, welche sich über Maße verschmutzen und die Auslenk- und Rückstellfunktion des mittleren Kotflügelabschnitts beeinträchtigen können.

Zwar ist aus AU—C—477 454 ein Kotflügel bekannt, der um eine Querachse schwenkbar ist, um bei aufsitzendem Auflieger ausgelenkt zu werden. Der Kotflügel selbst ist jedoch insgesamt einteilig ausgebildet und ermöglicht bei einer Kompaktbauweise nur eine geringe Auslenkbewegung. Bei einer Auslenkbewegung muß vergleichsweise viel Masse bewegt und infolgedessen ein erhöhter Verschleiß insbesondere des Schwenklagers und des Rückstellelements in Kauf genommen werden, die entsprechend stark dimensioniert sein müssen. Für eine Tandemachse ist der bekannte Kotflügel praktisch nicht geeignet, sofern eine kompakte Bauweise erstrebt ist.

Der ferner aus US—A—3 876 229 bekannte Kotflügel ist ebenfalls einteilig und verschwenkbar ausgebildet. Insofern gelten bei diesem grundsätzlich die vorgenannten Nachteile. Er verfolgt den Zweck, bei extremer Einfederung des zugeordneten Fahrzeugrades ein Auslenken des Kotflügels nach oben zu bewirken. Für eine Auslenkung des Kotflügels nach unten bei aufsitzendem Auflieger ist dieser nicht geeignet. In diesem Fall wird der bekannte Kotflügel beschädigt oder zerstört.

Die Erfindung wird nachfolgend anhand der beigefügten Zeichnung näher erläutert; es zeigen:

Fig. 1 in schematischer Teilseitenansicht die hintere Doppelachse einer Zugmaschine eines Sattelschleppers, und

Fig. 2 die in Fig. 1 rechts veranschaulichte letzte Achse in anderer Ausgestaltung.

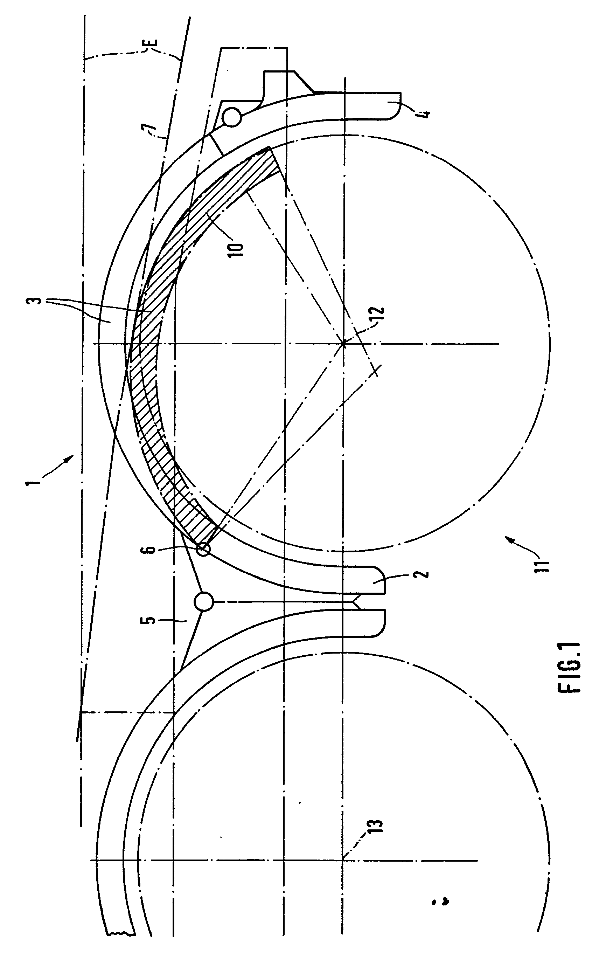

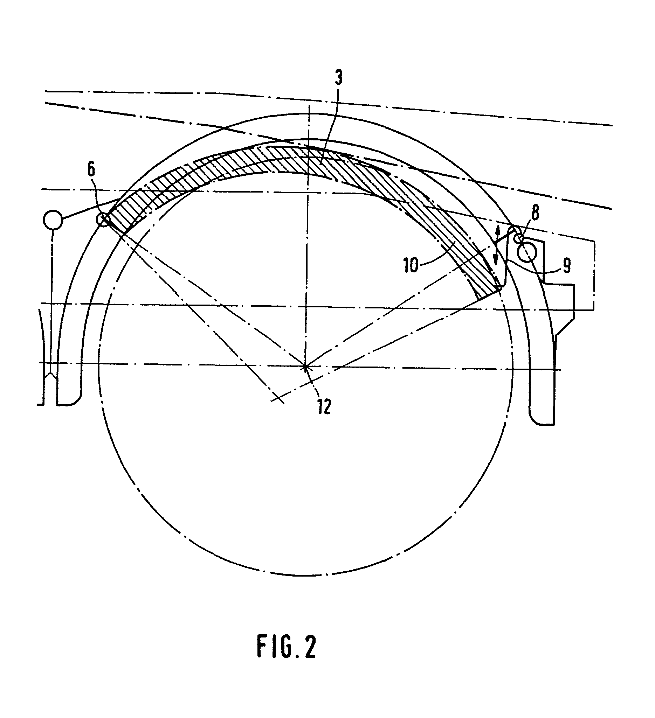

Der in der Zeichnung dargestellte Kotflügel (1) befindet sich an der hintersten Achse eines Doppelachsaggregates (Fig. 1), sowohl bei angetriebenen als auch nichtangetriebenen Achsen, oder an der angetriebenen Hinterachse eines Zwei-Achs-Fahrzeuges (Fig. 2).

Der Kotflügel (1) umfaßt drei hintereinander angeordnete Abschnitte (2, 3, 4) aus stabilem Material, von denen der vordere und der hintere Abschnitt (2, 4) fest am Fahrzeugrahmen (5) befestigt sind und der mittlere Abschnitt (3) um eine Fahrzeugquerachse (6) schwenkbar ist, die (in Fahrtrichtung) vor der zugeordneten Achse (12) liegt. Der mittlere Abschnitt (3) ist in besonders vorteilhafter Weise endseitig angelenkt, wie dies der letzten Achse (12) gemäß den Fig. 1 und 2 zu entnehmen ist.

In seiner gewöhnlichen Gebrauchslage gehen die drei gewölbten Kotflügelabschnitte (2, 3, 4) stetig ineinander über und bilden letztlich einen oberseitig geschlossenen Kotflügel (1).

Durch eine von oben auf den mittleren Kotflügelabschnitt (3) ausgeübte Kraft kann der Abschnitt (3) im Uhrzeigersinn nach unten geschwenkt werden, wie dies in strichpunktierter Linie in der Zeichnung gezeigt ist, und zwar durch einen Eingriff eines an der Zugmaschine angekoppelten Aufliegers (7), der bezüglich der Längsrichtung des Zugfahrzeugs abgewinkelt ist (vgl. Längsneigung E des Auflieger 7). Ein derartiger Winkel zwischen Zugmaschine (11) und Auflieger (7) entsteht beispielsweise beim Fahren des Sattelschleppers über eine Rampe oder beim Ankoppeln, wodurch sich der Auflieger (7) zum Rahmen neigt. Ersichtlich wird mithin der mittlere Kotflügelabschnitt (3) durch den Auflieger (7) nicht beschädigt.

Die Rückstellung des mittleren Kotflügelabschnitts (3) erfolgt durch eine Rückstellfeder (8) am nichtangelenkten Ende (10) des mittleren Kotflügelabschnitts (3), beispielsweise durch eine Torsionsfeder gemäß Fig. 2, die über ein Zugelement (9) mit dem zugehörigen Ende des mittleren Kotflügelabschnitts (3) verbunden ist. Der vordere Kotflügelabschnitt (2) sowie der hintere Kotflügelabschnitt (4) mit integrierten Rückleuchten und integrierter Unterlegkeil-Lagerung bleibt bei Betätigung des mittleren Kotflügelabschnitts in seiner Lage unverändert.

**Patentansprüche**

1. Kotflügel (1) für Fahrzeuge, vorzugsweise die Hinterräder von Kraftfahrzeugen, insbesondere Zugmaschinen von Sattelanhängern, bestehend aus drei hintereinander angeordneten Abschnitten (2, 3, 4) aus stabilem Material, von denen der vordere und der hintere Abschnitt (2, 4) fest am Fahrzeugrahmen (5) befestigt sind und der mittlere Abschnitt (3) aus seiner normalerweise gebrauchten Mittellage bewegt werden kann, dadurch gekennzeichnet, daß der mittlere Abschnitt (3) im Bereich seines einen Längsendes am Fahrzeugrahmen (5) oder am vorderen/hinteren Kotflügelabschnitt (2 bzw. 4) durch eine Fahrzeugquerachse (6) angelenkt und durch eine von oben auf den mittleren Kotflügelabschnitt (3) ausgeübte Kraft nach unten auslenkbar sowie in die normalerweise gebrauchte Mittellage rückstellbar ist.

2. Kotflügel nach Anspruch 1, dadurch gekennzeichnet, daß die Kraft durch einen winklig zur Zugmaschine angeordneten Sattelanhänger bzw. Auflieger (7) selbst ausgeübt wird.

3. Kotflügel nach Anspruch 1 oder 2, dadurch gekennzeichnet, daß eine Rückstellfeder (8) am nichtangelenkten Ende (10) des mittleren Kotflügelabschnitts (3) vorgesehen ist.

4. Kotflügel nach Anspruch 1 oder 2, dadurch gekennzeichnet, daß am nichtangelenkten Ende (10) des mittleren Kotflügelabschnitts (3) ein selbsttätig schalt- bzw. betätigbares Rückzugselement vorgesehen ist.

5. Kotflügel nach einem der Ansprüche 1 bis 4, dadurch gekennzeichnet, daß er an der letzten Achse (12) eines Mehrachs-Zugfahrzeugs (11) vorgesehen ist.

6. Kotflügel nach einem der Ansprüche 1 bis 5, dadurch gekennzeichnet, daß der mittlere Kotflügelabschnitt (3) unterseitig ein bogenförmiges verschleißfestes Gleitteil aufweist, das bei extremer Auslenkung des mittleren Kotflügelabschnitts mit dem zugeordneten Fahrzeugreifen in Eingriff kommen kann.

7. Kotflügel nach einem der Ansprüche 1 bis 6, dadurch gekennzeichnet, daß die Querachse (6) des mittleren Kotflügelabschnitts (3) vor oder hinter der Achse (12) des zugeordneten Fahrzeugrades angeordnet ist.

8. Kotflügel nach einem der Ansprüche 1 bis 7, dadurch gekennzeichnet, daß die drei hintereinander angeordneten Kotflügelabschnitte (2, 3, 4) in ihrer gewöhnlichen Gebrauchslage stetig ineinander übergehen und einen oberseitig geschlossenen Kotflügel bilden.

**Revendications**

1. Garde-boue (1) pour véhicules notamment les roues arrière de véhicules automobiles et en particulier pour les tracteurs de semi-remorques, garde-boue composé de trois segments de (2, 3, 4) disposés l'un derrière l'autre, ces segments étant réalisés en un matériau résistant, et le segment avant et le segment arrière (2, 4) étant fixés solidairement au chassis du véhicule alors que le segment médian (3) peut être dégagé de sa position d'utilisation moyenne normale, caractérisé en ce que le segment (3) est articulé au niveau de l'une de de ses extrémités longitudinales sur le chassis (5) ou sur le segment avant/arrière de garde-boue (2, 4) par l'intermédiaire d'un axe (6) transversal au véhicule et peut être pivoté vers le bas par une force exercée par le dessus, sur le segment médian (3) du garde-boue et être rappelé en position moyenne d'utilisation normale.

2. Garde-boue selon la revendication 1, caractérisé en ce que la force est exercée par une semi-remorque ou une flèche (7) faisant un angle par rapport au tracteur.

3. Garde-boue selon la revendication 1 ou 2, caractérisé par un ressort de rappel (8) prévu à l'extrémité non articulée (10) du segment médian (3) du garde-boue.

4. Garde-boue selon la revendication 1 ou 2, caractérisé en ce qu'à l'extrémité non articulée (10) du segment médian de garde-boue (3), il est prévu un élément de rappel à commutation à actionnement automatique.

5. Garde-boue selon l'une des revendications 1 à 4, caractérisé en ce qu'il est monté sur le dernier essieu (12) d'un tracteur (11) à plusieurs essieux.

6. Garde-boue selon l'une des revendications 1 à 5, caractérisé en ce que le segment médian du garde-boue comporte sur sa face inférieure une pièce de glissement en forme d'arc, résistant à l'usure, et qui en cas de débattement extrême du segment médian du garde-boue peut venir contre les pneus correspondants du véhicule.

7. Garde-boue selon l'une des revendications 1 à 6, caractérisé en ce que l'essieu transversal (6) du segment médian de garde-boue (3) est disposé en amont ou en aval de l'essieu (12) de la roue correspondante du véhicule.

8. Garde-boue selon l'une des revendications 1 à 7, caractérisé en ce que les trois segments successifs (2, 3, 4,) de garde-boue présentent une transition continue lorsqu'ils sont en position d'utilisation habituelle et forment un garde-boue dont la face supérieure est fermée.

**Claims**

1. A mud-guard (1) for a vehicle, preferably for the rear wheels of a motor vehicle, particularly of a tractor for a semi-trailer, the mud-guard comprising three sections (2, 3, 4) made of a strong material and arranged in tandem, wherein the foremost and the rearmost sections (2, 4) are fastenable to the vehicle frame (5) and the intermediate section (3) is movable from its intermediate position in which it is normally used, characterized in that one end portion of the intermediate section (3) is — by means of a pivot pin (6) extending transversely to the vehicle — pivotally attachable to the vehicle frame (5) or pivotally attached to either the foremost or the rearmost section (2 or 4), and in that the intermediate section (3), if subjected to a force exerted upon it from above, is downwardly swivellable yet restorable into its intermediate position of normal use.

2. A mud-guard according to claim 1, characterized in that the force is spontaneously exertable by the semi-trailer, or by a lie-on element, angularly arranged in relation to the tractor.

3. A mud-guard according to claim 1 or claim 2, characterized in that a restoring spring (8) is provided at the intermediate section's (3) end portion (10) which is not pivotally attachable or attached.

4. A mud-guard according to claim 1 or claim 2, characterized in that a spontaneously actuatable or operable retracting element is provided at the intermediate section's (3) end portion (10) which is not pivotally attachable or attached.

5. A mud-guard according to any of the claims 1 to 4, characterized in that it is mountable above the rearmost axle (12) of the multiple-axle tractor (11).

6. A mud-guard according to any of the claims 1 to 5 characterize d, in that the underside of the intermediate section (3) is provided with an arched wear-resistant slider which, in the event of the intermediate section being swivelled to an extreme extent is arranged to engage the associated tyre.

7. A mud-guard according to any of the claims 1 to 6 characterized in that the transverse pivot pin (6) for the intermediate section (3) is arranged either in front or at the rear of the axle (12) of the associated vehicle wheel.

8. A mud-guard according to any of the claims 1 to 7, characterized in that the three sections (2, 3, 4) arranged in tandem, if in their position of normal use, uniformly blend and form by their respective upper sides a continuous mud-guard.

FIG.1

EP 0 286 930 B1

FIG.2